# EUROPÄISCHE PATENTSCHRIFT

(11) **EP 1 689 556 B1**
(45) Veröffentlichungstag und Bekanntmachung des Hinweises auf die Patenterteilung: **21.03.2007**
(21) Anmeldenummer: 04802823.7
(22) Anmeldetag: 25.11.2004
(51) Int. Cl.: B23P 15/00, B21H 1/00, B21H 1/18, B21H 7/18

(54) **KALTUMFORMVERFAHREN ZUR HERSTELLUNG VON KUGELZAPFEN**
COLD FORMING METHOD FOR PRODUCING BALL JOURNALS
PROCEDE DE FORMAGE A FROID POUR PRODUIRE DES PIVOTS SPHERIQUES

(30) Priorität: 27.11.2003 DE 10356111
(43) Veröffentlichungstag der Anmeldung: 16.08.2006
(73) Patentinhaber: ZF FRIEDRICHSHAFEN AG, 88038 Friedrichshafen (DE)
(72) Erfinder: KRUSE, Jochen, 49088 Osnabrück (DE); ROSENBERGER, Klaus, 47800 Krefeld (DE)
(86) Internationale Anmeldenummer: PCT/DE2004/002614
(87) Internationale Veröffentlichungsnummer: WO 2005/051594

(56) Entgegenhaltungen:
- DE-A1- 4 340 162
- DE-A1- 19 955 768
- GB-A- 1 584 661

## Beschreibung

Die Erfindung betrifft ein Kaltumformverfahren zur Herstellung von Kugelzapfen mit einem Kugelbereich, einem Konusbereich und einem Gewindebereich für den Einbau in Kugelgelenke, siehe, zum Beispiel GB 1 584 661 oder DE 3004400.

Für die Herstellung von Kugelzapfen, die zum Einbau in Kugelgelenke vorgesehen sind, werden prinzipiell spanende sowie spanlose Herstellungsverfahren eingesetzt. Bei der spanenden Formgebung entstehen größere Mengen an Abfallmaterial, welche entsorgt werden müssen. Darüber hinaus besteht der Nachteil, dass das Abfallmaterial zunächst als Halbzeug zu erwerben ist. Nachteilig ist außerdem, dass auf den heutzutage üblichen Werkzeugmaschinen keine Taktzeiten möglich sind, die wesentlich über einer Anzahl von 10 Stück pro Minute liegen. Bei der spanenden Formgebung ist es darüber hinaus notwendig, dass zumindest der Gewindebereich durch einen Roll- bzw. Walzvorgang bearbeitet werden muss, um das notwendige Gewinde in diesen Bereich einzubringen. Die Taktzeiten derartiger Roll- bzw. Walzoperationen liegen ebenfalls im oben genannten Bereich von etwa 10 Stück pro Minute.

Alternativ zur spanenden Bearbeitung ist es im Stand der Technik bekannt, Kugelzapfen auf kaltem oder warmem Weg durch Pressen herzustellen. Die Pressvorgänge können in Richtung der Längsachse des Kugelzapfens, wobei üblicherweise ein Gratansatz an einem Ende des Kugelzapfenrohlings ausgebildet wird, oder waagerecht in einem zweiteiligen Presswerkzeug erfolgen, wobei ein Grat umlaufend um den gesamten Presskörperrohling entsteht. Die entstehenden Pressgrate werden dem Stand der Technik entsprechend durch eine spanende Nachbearbeitung entfernt. Somit entstehen auch bei einer spanlosen Ausformung des Kugelzapfens kosten- bzw. zeitintensive Arbeitsgänge bis zur Fertigstellung des Kugelzapfens.

Darüber hinaus sind aus dem Stand der Technik Kugelzapfen bekannt, die mehrteilig ausgeführt sind, auf deren Herstellung an dieser Stelle jedoch nicht näher eingegangen werden soll, da das erfindungsgemäße Verfahren die Herstellung von einteiligen Kugelzapfen betrifft.

Aufgabe der vorliegenden Erfindung ist es, ein Verfahren zur Herstellung von Kugelzapfen mit einem Kugelbereich, einem Konusbereich und einem Gewindebereich zu offenbaren, bei dem die Stückzahl pro Zeiteinheit zur Herstellung einzelner Kugelzapfen wesentlich gesteigert werden kann, so dass die notwendigen Herstellkosten sich signifikant reduzieren lassen.

Diese Aufgabe wird erfindungsgemäß durch die im Anspruch 1 offenbarte technische Lehre gelöst. Erfindungswesentlich dabei ist es, dass zunächst aus einem stabförmigen Stangenhalbzeugmaterial ein Kugelzapfenrohling mit ausgeformtem Konusbereich und zylinderförmigen Bereichen für Gewinde und Kugel mittels Fließpressen hergestellt wird, wobei der Pressansatz am freien Ende des zur Ausbildung für die Kugel vorgesehenen Bereiches angeordnet ist, und dass anschließend in einem weiteren Arbeitsgang mittels eines getriggerten synchronisierten Walzverfahrens durch Abrollen von Formkörpern der Kugelbereich ausgeformt wird.

Durch die neuartige Kombination der geschilderten Verfahrensschritte kann auf jegliche spanende Formgebung verzichtet werden. Die Taktzeiten sowohl beim Pressvorgang als auch beim nachgeschalteten Walzen liegen für das Pressen bei ca. 100 Stück pro Minute sowie beim Walzen im Bereich von ca. 50 Stück pro Minute.

Beim Walzverfahren kann es sich um ein so genanntes Flachbackenwalzverfahren oder um ein Rundbackenwalzverfahren handeln.

Durch die Kombination der genannten Herstellungsabläufe lässt sich somit eine erheblich größere Stückzahl an Kugelzapfen herstellen als bislang aus dem Stand der Technik bekannt. Dies ergibt sich unter anderem dadurch, dass beim Flachbackenwalzen oder beim Rundbackenwalzen mehrere Funktionsbereiche, wie beispielsweise der Kugelbereich, der Kegelbereich und der Gewindebereich gleichzeitig von einem Werkzeug bearbeitet werden können. Darüber hinaus entfällt selbstverständlich die Entsorgung jeglichen Abfallmaterials, wie dies bei der spanenden Herstellungsweise zwingend notwendig ist.

Da die Investitionskosten für eine Walzmaschine sich im gleichen Kostenbereich bewegen wie zur Anschaffung einer Drehmaschine, ergeben sich auch im Bereich der Anfangsinvestitionen zur Herstellung von Kugelzapfen, bedingt durch den höheren Ausstoß an Werkstücken, Kostenvorteile für die neue erfinderische Lösung.

Bei dem erfindungsgemäßen Verfahren hat es sich darüber hinaus als vorteilhaft erwiesen, während des Flachbacken- oder Rundbackenwalzens zunächst einen Halsbereich zwischen dem Konusbereich und dem zur Ausformung der Kugel vorgesehenen zylinderförmigen Bereich auszubilden. Beispielhafte Festigkeitsmessungen an mit dem neuartigen Verfahren hergestellten Kugelzapfen haben ergeben, dass durch die Ausformung eines Halsbereiches durch Walzen die Dauerfestigkeit der Kugelzapfen um bis zu 50% gesteigert werden kann. Durch die Steigerung der Dauerfestigkeit durch das Halswalzen ergibt sich die Möglichkeit, Stähle mit Mikrolegierungselementen einzusetzen, welche in den Beschaffungskosten wesentlich niedriger liegen als die für Wärmebehandlungen notwendigen Vergütungsstähle. Die Kaltverformung der mit Mikrolegierungselementen versehenen C-Mn-Stähle reicht insbesondere im Halsbereich aus, um eine ausreichende Festigkeit zu erreichen. Die Steigerung der Festigkeitswerte kann dazu genutzt werden, die Baugrößen entsprechender Kugelzapfen bei gleichen äußeren Belastungen zu reduzieren.

Es hat sich darüber hinaus als weitere besondere Ausgestaltung des erfindungsgemäßen Verfahrens als zweckmäßig gezeigt, dass vor dem Walzvorgang in das zur Ausbildung des Kugelbereiches vorgesehene freie Ende des Kugelzapfenrohlings eine stirnseitig offene sacklochförmige Ausnehmung eingepresst wird. Die sacklochartige Ausnehmung kann dabei durch das beim Pressen verwendete Oberwerkzeug ausgeformt werden. Die Ausnehmung erleichtert die Umformung des für die Ausbildung des Kugelbereiches vorgesehenen zylinderförmigen Teilbereiches des Kugelzapfens zu seiner endgültigen kugelförmigen Gestalt. Darüber hinaus stellt die Ausnehmung natürlich eine Materialeinsparung dar. Bleibt die sacklochartige Ausnehmung, das so genannte Polloch, nach der Herstellung des Kugelbereiches des Kugelzapfens zumindest teilweise noch vorhanden, so kann die Ausnehmung beispielsweise zur Aufnahme von Sensoren dienen oder als Fettreservoir genutzt werden. Natürlich ist in diesem Zusammenhang auch das Verschließen des Polloches zum Beispiel mittels eines Plastikdeckels denkbar.

Im Folgenden werden anhand der beigefügten Zeichnungen die Arbeitsabläufe sowohl beim Flachbackenwalzen als auch beim Rundbackenwalzen näher erläutert. Es zeigt:
- Figur 1: die Seitenansicht eines Kugelzapfenrohlings vor der Ausformung des Kugelbereiches mittels des getriggerten synchronisierten Walzverfahrens,
- Figur 2: eine schematische Draufsicht auf eine Flachbackenwalzvorrichtung mit darin angeordnetem Kugelzapfen während des Walzvorganges,
- Figur 3A: eine Schnittdarstellung durch die Flachbackenwalzvorrichtung zu Beginn des Walzvorganges entsprechend der Schnittlinie A-A aus Figur 2,
- Figur 3B: eine Schnittdarstellung durch die Flachbackenwalzvorrichtung während des Walzvorganges entsprechend der Schnittlinie B-B aus Figur 2,
- Figur 3C: Schnittdarstellung durch eine Flachbackenwalzvorrichtung bei Beendigung des Formprozesses für den Kugelzapfen entsprechend der Schnittlinie C-C aus Figur 2,
- Figur 4: eine schematische Schnittdarstellung durch eine Rundbackenwalzvorrichtung mit darin angeordnetem Kugelzapfenrohling,
- Figur 5: eine Draufsicht auf die Rundbackenwalzvorrichtung der Figur 4,
- Figur 6: eine perspektivische Darstellung einer weiteren Variante einer Rundbackenwalzvorrichtung mit darin angeordnetem Kugelzapfenrohling,
- Figur 7: eine schematische Darstellung durch eine Rundbackenwalzvorrichtung mit darin angeordnetem Kugelzapfenrohling
- und:
- Figur 8: eine Draufsicht auf die Rundbackenwalzvorrichtung der Fig. 7.

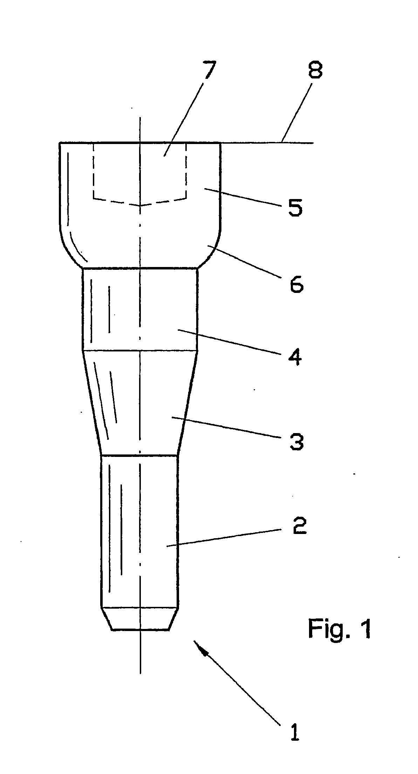

Der in Figur 1 dargestellte Kugelzapfenrohling wird mittels eines Fließpressverfahrens hergestellt und besteht im Wesentlichen aus mehreren in Kugelzapfenlängsrichtung hintereinander angeordneten Teilbereichen unterschiedlicher räumlicher Ausbildung. Die verschiedenen Bereiche sind nach dem Fließpressen mittels der erfindungswesentlichen Verfahrensmerkmalskombination in ihre endgültige Gestalt umzuformen, wobei sich nach Beendigung des erfindungsgemäßen Kaltumformverfahrens eine Kugelzapfengestalt entsprechend der Darstellung der Figur 3C ergibt.

Der in seiner Gesamtheit mit 1 bezeichnete Kugelzapfenrohling besteht somit entsprechend der Darstellung der Figur 1 aus einem an einem freien Ende des Kugelzapfenrohlings 1 angeordneten zylinderförmigen Bereich 2, an dem sich nach Fertigstellung des Kugelzapfens ein Gewinde zur Befestigung des Kugelzapfens an einem Maschinen- oder Karosseriebauteil befindet. An den zylinderförmigen Bereich 2 schließt sich unmittelbar ein konusförmiger Bereich 3 an. Dieser konusförmige Bereich 3 besitzt nach dem Fließpressvorgang prinzipiell bereits seine fertigen Abmessungen, wobei in einem nachgeschalteten Arbeitsgang eine Glättung der Konusoberfläche herbeigeführt werden kann. An den konusförmigen Bereich 3 wiederum schließt sich ein weiterer zylinderförmiger Bereich 4 an, der den sogenannten Halsabschnitt des fertigen Kugelzapfens umfasst und in den entsprechend der Darstellung der Figur 3C ein Einschnitt als Übergang zu dem sich daran anschließenden Bereich eingeformt wird. Als abschließender Bereich des Kugelzapfenrohlings 1 ist an seinem zweiten freien Ende ein weiterer zylinderförmiger Bereich 5 angeordnet, welcher im Übergang zum zylinderförmigen Bereich 4 einen halbkreisförmigen Teilbereich 6 aufweisen kann. Alternativ zur halbkreisförmigen Ausbildung des Teilbereiches 6 ist hier auch ein konusförmiger Übergang zum zylinderförmigen Bereich 4 denkbar. Der zuletzt angesprochene zylinderförmige Bereich 4 ist im Rahmen des erfindungsgemäßen Verfahrens kugelig umzuformen, so dass sich der in der Figur 3C dargestellte Kugelkopf 18 am oberen freien Ende des Kugelzapfens ergibt. Zur Erleichterung des Umformprozesses kann am oberen freien Ende im zylinderförmigen Bereich 5 eine im Wesentlichen ebenfalls zylinderförmig ausgebildete Ausnehmung 7 in Form eines Sackloches eingebracht werden. Dies kann im Rahmen des vorgeschalteten Fließpressvorganges geschehen und wird mittels des Oberwerkzeuges der Fließpresse vorgenommen. Die beiden Presswerkzeughälften sind dabei so gestaltet, dass die Trennlinie beider Hälften im Bereich der Trennlinie 8 liegt, so dass die Werkzeugtrennebene und damit eventuell verbundene Gratansammlungen außerhalb des kugelförmig auszubildenden zylinderförmigen Bereiches 5 liegen.

Für die fertige Ausformung des Kugelzapfenrohlings 1 mittels eines getriggerten synchronisierten Walzverfahrens durch Abrollen von Formkörpern stehen prinzipiell drei mögliche Walzverfahrenvarianten zur Verfügung. Diese drei unterschiedlichen Verfahren werden im Folgenden anhand der Darstellungen erläutert.

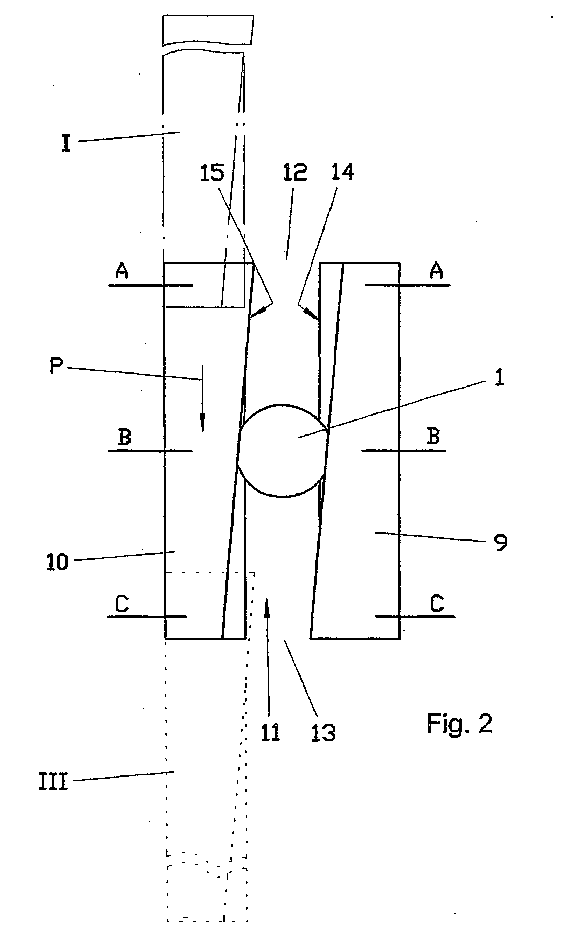

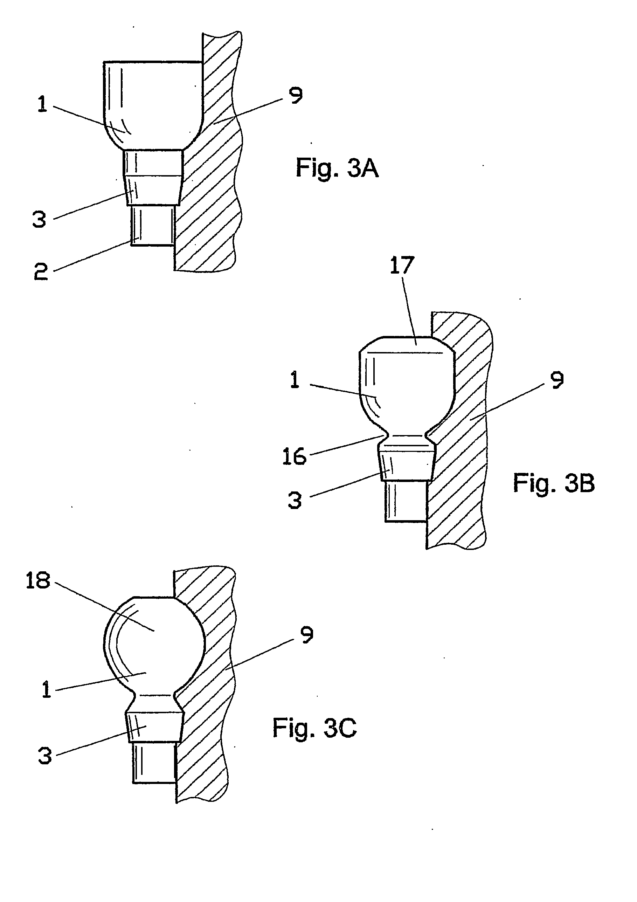

Als eine Walzverfahrensvariante bietet sich zunächst das so genannte Flachbackenwalzverfahren an. Bei diesem Walzverfahren besteht die zugehörige Walzvorrichtung aus zwei Flachbacken 9 und 10, wobei eine der Flachbacken, in der vorliegenden Darstellung der Figur 2 mit 9 bezeichnet, als feststehende Flachbacke ausgeführt ist, wohingegen die sich gegenüber befindliche Flachbacke 10 eine translatorische Bewegung in Richtung des Pfeiles P ausführt. Zwischen den Flachbacken 9 und 10 befindet sich der Walzspalt 11 mit einem Eingangsbereich 12 und einem Ausgangsbereich 13. Der Kugelzapfenrohling 1 wird zu Beginn des Flachbackenwalzverfahrens im Bereich der Schnittlinie A-A in den Walzspalt 11 eingeführt, wobei die bewegliche Walzbacke 10 eine der strichpunktierten Darstellung entsprechende Position einnimmt. Durch Verlagerung der beweglichen Flachbacke 10 und der sich daraus ergebenden Abrollbewegung des Kugelzapfenrohlings 1 wird dieser durch den Walzspalt 11 transportiert. Die Ausformung sowohl des Kugelzapfens als auch des sich daran anschließenden Halsbereiches erfolgt während der Bewegung des Kugelzapfenrohlings innerhalb des Walzspaltes 11. Zur Ausformung weisen die Flachbacken 9 und 10 zu Beginn des eigentlichen Walzvorganges entsprechend der Figur 3A eine Kontur auf, welche im Wesentlichen dem des Kugelzapfenrohlings 1 entspricht. In der Figur 3A ist zu diesem Zweck der Kugelzapfenrohling 1 zusammen mit der Flachbacke 9 dargestellt. Das Umrissprofil der in den Figuren 3A, 3B und 3C dargestellten weiteren Flachbacke 10 entspricht prinzipiell demjenigen der in den genannten Figuren dargestellten Flachbacke 9. Das Profil der Flachbacken 9 und 10 ändert sich an den zueinander gewandten Seitenflächen 14 und 15 kontinuierlich bis hin zur fertigen Umrisskontur im Ausgangsbereich 13 entsprechend der Figur 3C bei fertiggestelltem Kugelzapfen. Durch die translatorische Bewegung der beweglichen Flachbacke 10 ist das Anfangsprofil der in der Figur 3A dargestellten Flachbacke 9 selbstverständlich bei der Flachbacke 10 in der Darstellung der Figur 2 im unteren Bereich im Bereich des Punktes C befindlich, wohingegen das in der Figur 3C dargestellte Endprofil der Flachbacke 9 sich bei der Flachbacke 10 im Bereich des Punktes A befindet. Somit sind die Flachbacken 9 und 10 im Bereich der Schnittlinie B-B in Figur 2 symmetrisch ausgebildet. Aus der Veränderung der Umrisskonturen der Seitenflächen 14 bzw. 15 der Flachbacken 9 und 10 ist ersichtlich, dass der Verlauf der Umformung des Kugelkopfes sowie des Halsbereiches phasenweise nacheinander erfolgt. Nach Einführung des Kugelzapfenrohlings 1 in den Walzspalt 11 wird zunächst der Halsansatz 16 ausgeformt, wobei gleichzeitig im Kopfbereich 17 des zylinderförmigen Bereiches 5 eine Einformung erfolgt, die durch die anhand der Figur 1 erläuterte Ausnehmung 7 am freien Ende des Kugelzapfenrohlings 1 erleichtert wird. Die Ausbildung des Halsansatzes 16 mittels des Walzverfahrens führt zu einer wesentlichen Festigkeitssteigerung in diesem Bereich, da im Gegensatz zu spanenden Bearbeitungen keine Materialwegnahme erfolgt, sondern vielmehr im genannten Bereich das Material des Kugelzapfenrohlings umgeformt wird.

Im weiteren Verlauf des Walzvorganges zwischen dem Bereich der Schnittlinie B-B und C-C erfolgt danach die endgültige Ausformung des Kugelkopfes 18 hin zu seiner endgültigen Gestalt, wobei bei Beendigung des Walzvorganges die bewegliche Flachbacke 10 die punktierte Position III in der Figur 2 einnimmt. Gleichzeitig kann während des gesamten Walzvorganges eine Glättung der Oberfläche des konusförmigen Bereiches 3 des Kugelzapfenrohlings 1 durch geeignete Gestaltung der Kontur der Seitenflächen 14 bzw. 15 der Flachbacken 9 und 10 vorgenommen werden. Darüber hinaus ist selbstverständlich auch das Einbringen des erforderlichen Gewindes in den zylinderförmigen Bereich 2 am unteren freien Ende des Kugelzapfenrohlings 1 möglich. Somit erfolgt gegebenenfalls durch entsprechende Gestaltung der Flachbacken während einer translatorischen Bewegung der beweglichen Flachbacke 10 eine entsprechende Ausformung des gesamten Kugelzapfens, ohne dass wie bei einer spanenden Bearbeitung ein Materialabtrag und eine Materialentsorgung notwendig sind. Darüber hinaus führt der Walzvorgang insgesamt zu einer Erhöhung der Festigkeit der Oberfläche, so dass auf anschließende Härtungsmaßnahmen verzichtet werden kann.

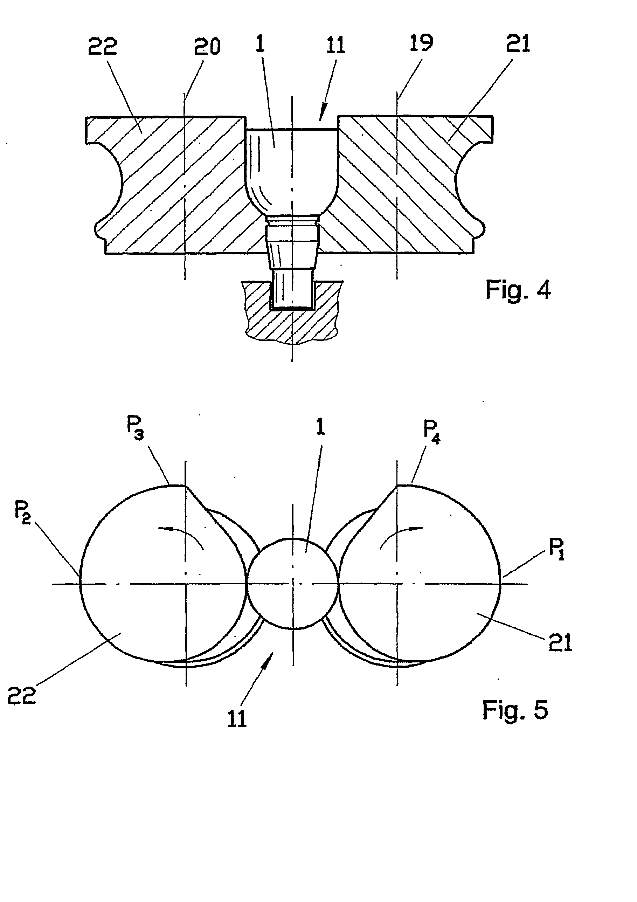

Der geschilderte Ablauf des Walzvorganges zur Herstellung des fertigen Kugelzapfens lässt sich alternativ zum Flachbackenwalzverfahren auch durch Vorrichtungen durchführen, deren Walzbacken eine gekrümmte Gestalt aufweisen. Nachfolgend soll zunächst anhand der Darstellung der Figuren 4 und 5 eine erste Form des Rundbackenwalzens erläutert werden. Die Rundbackenwalzvorrichtung besteht dabei entsprechend der Darstellung der Figuren 4 und 5 aus zwei nebeneinander auf parallelen Drehachsen 19 und 20 angeordneten Walzenzylindern 21 und 22. Zwischen beiden Walzenzylindern ergibt sich analog zum Flachbackenwalzen ein Walzspalt 11, in den der Kugelzapfenrohling 1 eingeführt wird. Beide Walzenzylinder 21 und 22 besitzen an ihrer Mantelfläche die Negativform des Umrisses sowohl des Kugelzapfenrohlings 1 als auch in einem anderen Winkelbereich, der am Umfang um ca. 270° versetzt angeordnet werden kann, den Umriss des fertigen Kugelzapfens. Der Walzvorgang erfolgt durch eine gegenläufige Drehbewegung der Walzenzylinder 21 und 22, wobei der Kugelzapfen selbst stationär im Walzspalt 11 verbleibt.

Die Darstellung der Figuren 4 und 5 zeigt eine Stellung der Walzenzylinder unmittelbar nach Einbringen des Kugelzapfenrohlings 1 in den Walzspalt 11. In der Schnittdarstellung der Figur 4 ist gleichzeitig zu erkennen, dass am Umfang der Walzenzylinder 21 und 22 um 180° versetzt im Bereich der Punkte P1 und P2 ein Profil ausgebildet ist, welches im Wesentlichen demjenigen der Figur 3B der dort dargestellten Flachbacke 9 entspricht. Im Bereich der Punkte P3 bzw. P4 am Umfang der Walzenzylinder 21 bzw. 22 ist in die Umfangsfläche eine Umrisskontur entsprechend der Figur 3C mit der dort dargestellten Flachbacke 9 ausgebildet. Der Walzvorgang des Kugelzapfenrohlings hin zu seiner endgültigen Gestalt erfolgt somit während einer 270° Umdrehung der Walzenzylinder 21 und 22. Auch beim sogenannten Rundbackenwalzverfahren kann selbstverständlich eine gleichzeitige Glättung des konusförmigen Bereiches 3 des Kugelzapfenrohlings 1 ebenso durchgeführt werden wie das Einbringen des notwendigen Gewindes in den zylinderförmigen Bereich 2.

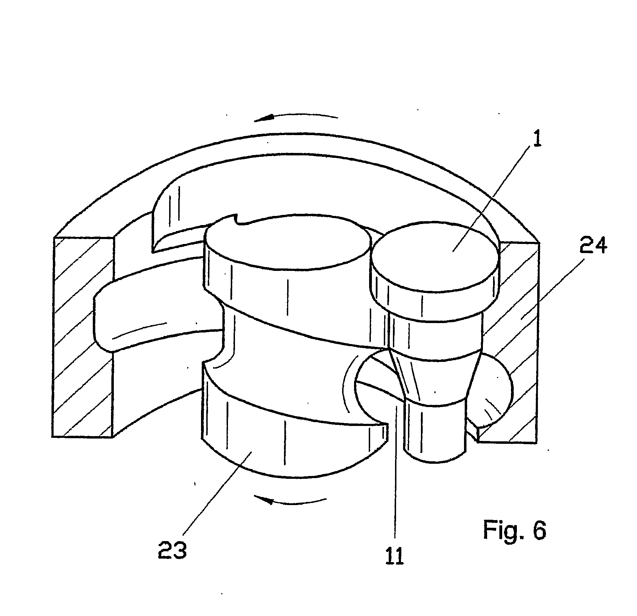

Als weitere Variante eines so genannten Rundbackenwalzverfahrens sind Vorrichtungen geeignet, bei denen eine Walzbacke durch einen Walzenzylinder 23 ähnlich demjenigen der oben beschriebenen ersten Variante ausgebildet ist, wohingegen die zweite Walzbacke durch einen konzentrisch den Walzenzylinder umschließenden Walzenhohlzylinder 24 gebildet ist. In Analogie der oben beschriebenen alternativen Walzverfahren ergibt sich zwischen dem Walzenzylinder 23 und dem diesen umgebenden Walzenhohlzylinder 24 entsprechend der Figur 6 ein Walzspalt 11, in den der auszuformende Kugelzapfenrohling 1 eingeführt wird. An der inneren Mantelfläche des Walzenhohlzylinders 24 sowie an der äußeren Mantelfläche des Walzenzylinders 23 ist jeweils die veränderliche Gestalt der Umrissstruktur des zu walzenden Kugelzapfenrohlings 1 ausgeprägt. Der eigentliche Walzvorgang erfolgt durch eine gegenläufige Drehung von Walzenzylinder 23 und Walzenhohlzylinder 24 zueinander, wobei die Relativbewegung des Walzenzylinder 23 und des Walzenhohlzylinders 24 für die Formgebung entscheidend sind. Somit kann gegebenenfalls auch nur einer der Zylinder 23 oder 24 gedreht werden, während der andere stillsteht. Auch bei diesem Verfahren lässt sich sowohl der Kugelkopf als auch der Halsansatz und gegebenenfalls darüber hinaus der konusförmige Bereich sowie der Gewindebereich des fertigen Kugelzapfens ausbilden. Somit bietet auch diese weitere Variante des Rundbackenwalzens die entsprechenden Vorteile in Bezug auf hohe Fertigungsstückzahlen sowie Festigkeitssteigerung gegenüber den aus dem Stand der Technik bekannten Verfahren.

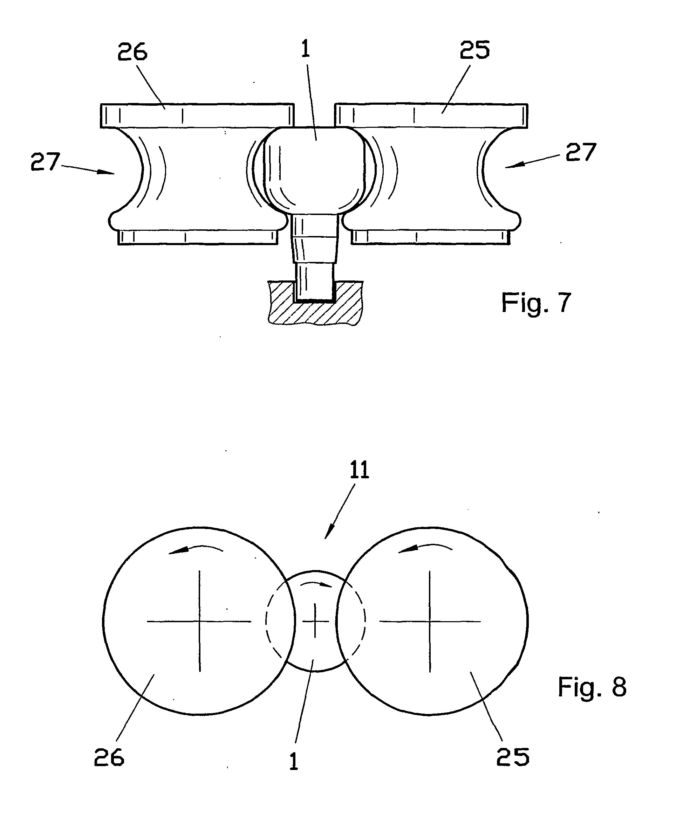

Die Umformung des Kugelzapfens kann auch mit einer an sich bekannten Rundbackenwalzvorrichtung erfolgen, wie sie in den Figuren 7 und 8 beispielhaft dargestellt ist.
Die Bearbeitung des Kugelzapfenrohlings 1 erfolgt hierbei durch Abrollen der um ihre Drehachsen rotierenden, symmetrischen Walzenzylinder 25 und 26. Der hugelzapfenrohling 1 ist zwischen den Walzenzylindern 25, 26 im Walzspalt 11 angeordnet. Seine kugelige Gestalt erhält der Kugelzapfenrohling 1 durch die entsprechend ausgeformte Umfangsgeometrie der Walzenzylinder 25, 26. In die Mantelfläche 27 bzw. 28 der Walzenzylinder 25, 26 ist eine Negativ-Kontur eingeformt, die auch den zylindrisch geformten Bereich 5 des Kugelzapferuohlings 1 ausbilden kann. Die sich drehenden Walzenzylinder 25, 26 werden hierbei zunächst auf den Kugelzapfenrohling 1 zu bewegt. Diese Zustellbewegung kann beispielsweise mittels eines Hydraulik-Zylinders erfolgen.

### Bezugszeichenliste

- 1.: Kugelzapfenrohling
- 2.: zylinderförmiger Bereich
- 3.: konusförmiger Bereich
- 4.: zylinderförmiger Bereich
- 5.: zylinderförmiger Bereich
- 6.: halbkreisförmiger Teilbereich
- 7.: Ausnehmung
- 8.: Trennlinie
- 9.: Flachbacke
- 10.: Flachbacke
- 11.: Walzspalt
- 12.: Eingangsbereich
- 13.: Ausgangsbereich
- 14.: Seitenfläche
- 15.: Seitenfläche
- 16.: Halsansatz
- 17.: Kopfbereich
- 18.: Kugelkopf
- 19.: Drehachse
- 20.: Drehachse
- 21.: Walzenzylinder
- 22.: Walzenzylinder
- 23.: Walzenzylinder
- 24.: Walzenhohlzylinder
- 25.: Walzenzylinder
- 26.: Walzenzylinder
- 27.: Mantelfläche

## Patentansprüche

1. Kaltumformverfahren zur Herstellung von Kugelzapfen mit einem Kugelbereich, einem Konusbereich und einem Gewindebereich für den Einbau in Kugelgelenke, bei dem zunächst aus einem stabförmigen Stangenhalbzeugmaterial ein Kugelzapfenrohling (1) mit ausgeformtem Konusbereich (3) und zylinderförmigen Bereichen für Gewinde (2) und Kugel (5) mittels Fließpressen hergestellt wird, wobei der Pressansatz am freien Ende des zur Ausbildung der Kugel vorgesehenen Bereiches (5) angeordnet ist und bei dem anschließend in mindestens einem weiteren Arbeitsgang mittels eines Walzverfahrens durch Abrollen von Formkörpern der Kugelbereich ausgeformt wird.

2. Verfahren nach Anspruch 1,
**dadurch gekennzeichnet, dass**
das Walzverfahren ein getriggertes synchronisiertes Walzverfahren ist.

3. Verfahren nach Anspruch 1 oder 2,
**dadurch gekennzeichnet, dass**
gleichzeitig mit der Ausformung des Kugelbereiches in seine Endform der Gewindebereich ausgebildet wird.

4. Verfahren nach einem der Ansprüche 1 bis 3,
**dadurch gekennzeichnet, dass**
gleichzeitig mit der Ausformung des Kugelbereiches in seine Endform der im vorgeschalteten Pressverfahren ausgebildete Konusbereich (4) geglättet wird.

5. Verfahren nach Anspruch 1 bis 4,
**dadurch gekennzeichnet, dass**
vor dem Walzvorgang in das zur Ausbildung des Kugelbereiches vorgesehene freie Ende des Kugelzapfenrohlings (1) eine stimseitig offene sacklochförmige Ausnehmung (7) eingepresst wird.

6. Verfahren nach Anspruch 5,
**dadurch gekennzeichnet, dass**
die Ausnehmung (7) durch das beim Pressen verwendete Oberwerkzeug ausgeformt wird.

7. Verfahren nach einem der Ansprüche 1 bis 6,
**dadurch gekennzeichnet, dass**
während des Walzens zunächst ein zylinderfönniger Halsbereich (4) zwischen dem Konusbereich (3) und dem zur Ausformung der Kugel vorgesehenen zylinderförmigen Bereich (5) ausgeformt wird.

8. Verfahren nach einem der Ansprüche 1 bis 7,
**dadurch gekennzeichnet, dass**
als Walzverfahren ein Flachbackenwalzverfahren eingesetzt wird.

9. Verfahren einem der Ansprüche 1 bis 7,
**dadurch gekennzeichnet, dass**
als Walzverfahren ein Rundbackenwalzverfahren eingesetzt wird.

10. Verfahren nach Anspruch 9,
**dadurch gekennzeichnet, dass**
die Rundbackenwalzen als nebeneinander auf parallelen Drehachsen (19, 20) befindliche Walzenzylinder (21, 22) ausgebildet sind, deren Außenkontur jeweils eine halbe Negativform des Umrisses des zu walzenden Kugelzapfens aufweist, wobei der Kugelzapfen während des Walzprozesses in einem Walzspalt (11) zwischen den Walzenzylindern (21, 22 bzw. 25, 26) angeordnet ist.

11. Verfahren nach Anspruch 9 oder 10,
**dadurch gekennzeichnet, dass**
die Rundbackenwalzen zum einen durch einen Walzenzylinder (23) und zum anderen durch eine konzentrisch den Walzenzylinder (24) umschließenden Hohlzylinder gebildet sind, wobei die Außenkontur des Walzenzylinders (23) und die Innenkontur des Hohlzylinders (24) jeweils eine über den Außen- bzw. Innenumfang veränderliche halbe Negativform der Umrissform des zu walzenden Kugelzapfens bilden und wobei der Kugelzapfen während des Walzprozesses im Walzspalt (11) zwischen der Außen- und Innenkontur von Walzenzylinder (23) und Walzenhohlzylinder (24) angeordnet ist.

## Claims

1. Cold forming method to produce ball journals with a spherical region, a conical region and a threaded region for fitting in ball and socket joints, whereby a ball journal blank (1) with a formed cone region (3) and cylindrical regions for thread (2) and ball (5) are firstly produced by extrusion from a bar-shaped rod of semi-finished material, and the pressing shoulder is disposed at the free end of the ball region (5) intended for forming the ball and the ball region is formed in at least one other subsequent work operation by means of a rolling method by rolling off forming bodies.

2. Method as claimed in claim 1,
**characterised in that**
the rolling method is a triggered synchronised rolling method.

3. Method as claimed in claim 1 or 2,
**characterised in that**
the threaded region is simultaneously formed as the ball region is formed to its end shape.

4. Method as claimed in one of claims 1 to 3,
**characterised in that**
the cone region (4) formed in the upstream pressing method is simultaneously smoothed as the ball region is formed to its end shape.

5. Method as claimed in claim 1 to 4,
**characterised in that**
prior to the rolling operation at the free end of the ball journal blank (1) intended for forming the ball region, an end-face open blind bore-shaped recess (7) is pressed in.

6. Method as claimed in claim 5,
**characterised in that**
the recess (7) is formed by the top die during pressing.

7. Method as claimed in one of claims 1 to 6,
**characterised in that**,
during rolling, a cylindrical neck region (4) is firstly formed between the cone region (3) and the cylindrical region (5) intended for forming the ball.

8. Method as claimed in one of claims 1 to 7,
**characterised in that**
a flat die rolling method is used as the rolling method.

9. Method as claimed in one of claims 1 to 7,
**characterised in that**
a round die rolling method is used as the rolling method.

10. Method as claimed in claim 9,
**characterised in that**
the round die rolls are provided in the form of roll cylinders (21, 22) disposed adjacent to one another on parallel axes of rotation (19, 20), the external contours of which respectively have a half negative shape of the contour of the ball journal to be rolled, and the ball journal is disposed in a roll gap (11) between the roll cylinders (21, 22 respectively 25, 26) during the rolling process.

11. Method as claimed in claim 9 or 10,
**characterised in that**
the round die rolls are provided in the form of a roll cylinder (23) on the one hand and a hollow cylinder concentrically surrounding the roll cylinder (24) on the other, and the external contour of the roll cylinder (23) and the internal contour of the hollow cylinder (24) respectively form a half negative shape of the contour shape of the ball journal to be rolled which changes across the external respectively internal contour, and the ball journal is disposed in the roll gap (11) between the external and internal contour of the roll cylinder (23) and roll hollow cylinder (24) during the rolling process.

## Revendications

1. Procédé de formage à froid pour la fabrication de pivots sphériques avec une région sphérique, une région conique et une région filetée pour l'installation dans des articulations sphériques, dans lequel est d'abord fabriquée à partir d'un matériau de demi-produit de tige en forme de barre une ébauche de pivot sphérique (1) avec une région conique formée (3) et des régions cylindriques pour un filetage (2) et une sphère (5) au moyen de pressage par fluage, où l'embout de pressage est agencé à l'extrémité libre de la région (5) prévue pour la formation de la boule, et dans lequel la région sphérique est ensuite formée dans au moins une autre opération de traitement au moyen d'un procédé de laminage par roulage de corps de forme.

2. Procédé selon la revendication 1, **caractérisé en ce que** le procédé de laminage est un procédé de laminage synchronisé déclenché.

3. Procédé selon la revendication 1 ou 2, **caractérisé en ce que** la région filetée est formée simultanément à la formation de la région sphérique dans sa forme finale.

4. Procédé selon l'une des revendications 1 à 3, **caractérisé en ce que** la région conique (4) formée dans le procédé de pressage placé en amont est lissée simultanément à la formation de la région sphérique dans sa forme finale.

5. Procédé selon l'une des revendications 1 à 4, **caractérisé en ce qu'**avant l'opération de laminage dans l'extrémité libre prévue pour la formation de la région sphérique de l'ébauche de pivot sphérique (1) un évidement frontal ouvert (7) en forme de logement à fond plein est embouti.

6. Procédé selon la revendication 5, **caractérisé en ce que** l'évidement (7) est formé par l'outil supérieur utilisé lors du pressage.

7. Procédé selon l'une des revendications 1 à 6, **caractérisé en ce que** pendant le laminage, une région de col cylindrique (4) est d'abord formée entre la région conique (3) et la région cylindrique (5) prévue pour la formation de la sphère.

8. Procédé selon l'une des revendications 1 à 7, **caractérisé en ce qu'**un procédé de laminage à plat est utilisé comme procédé de laminage.

9. Procédé selon l'une des revendications 1 à 7, **caractérisé en ce qu'**un procédé de laminage à section variable est utilisé comme procédé de laminage.

10. Procédé selon la revendication 9, **caractérisé en ce que** les rouleaux de laminage à section variable sont formés de cylindres de laminage (21, 22) côté à côte sur des axes de rotation parallèles (19, 20), dont les contours extérieurs présentent chacun une demi forme négative du contour du pivot sphérique à laminer, dans lequel le pivot sphérique est agencé pendant le processus de laminage dans un espace de laminage (11) entre les cylindres de laminage (21, 22 ou 25, 26).

11. Procédé selon la revendication 9 ou 10, **caractérisé en ce que** les rouleaux de laminage à section variable sont formés d'une part par un cylindre de laminage (23) et d'autre part par un cylindre creux renfermant le cylindre de laminage (24), dans lequel le contour extérieur du cylindre de laminage (23) et le contour intérieur du cylindre creux (24) forment chacun respectivement une demi forme négative de dimensions intérieure et extérieure variables de forme de contour du pivot sphérique à laminer et dans lequel le pivot sphérique est agencé pendant le processus de laminage dans l'espace de laminage (11) entre les contours extérieur et intérieur du cylindre de laminage (23) et le cylindre creux de laminage (24).
